# EUROPÄISCHE PATENTSCHRIFT

(11) **EP 4 519 367 B1**
(45) Veröffentlichungstag und Bekanntmachung des Hinweises auf die Patenterteilung: **09.12.2026**
(21) Anmeldenummer: 24701599.3
(22) Anmeldetag: 19.01.2024
(51) Int. Cl.: C09D 5/00, C09D 5/02

(54) **PTFE-REDUZIERTE STRUKTURIERUNGSMITTEL FÜR PULVERLACKE**
PTFE-REDUCED STRUCTURANTS FOR POWDER COATINGS
AGENTS STRUCTURANTS RÉDUITS EN PTFE POUR REVÊTEMENTS EN POUDRE

(30) Priorität: 03.02.2023 EP 23154832
(43) Veröffentlichungstag der Anmeldung: 12.03.2025
(73) Patentinhaber: CLARIANT INTERNATIONAL LTD, 4132 Muttenz (CH)
(72) Erfinder: WUNDLECHNER, Milena, 86368 Gersthofen (DE); BODENDORFER, Simon, 86368 Gersthofen (DE); SCHWABE, Jeremia, 86368 Gersthofen (DE); REINER, Dorina, 86502 Osterbuch (DE); SPAR, Siegfried, 86554 Pöttmes (DE)
(74) Vertreter: Zusammenschluss Clariant
(86) Internationale Anmeldenummer: PCT/EP2024/051287
(87) Internationale Veröffentlichungsnummer: WO 2024/160563

(56) Entgegenhaltungen:
- EP-A1- 0 982 369
- EP-A1- 3 192 821
- EP-A1- 3 875 269
- CN-A- 103 160 192
- CN-A- 112 724 799

## Beschreibung

### Technisches Gebiet der Erfindung

Die Erfindung betrifft PTFE-reduzierte Additive für Pulverlacke zur Darstellung eines Pulverlacks mit einer strukturierten Oberfläche.

### Hintergrund der Erfindung

Pulverlacke dienen der lösemittelfreien Beschichtung von Metallen (35 %), Haushaltsgeräten (21 %), Fassaden (20 %), Möbeln (13 %) und Automobilen. In vielen Anwendung sind strukturierte Beschichtungen gewünscht. Diese werden durch Zugabe von Polytetrafluorethylen ("PTFE") oder Modifikation einzelner Komponenten mit PTFE erzielt.

Additive zur Modifikation der Eigenschaften und Oberfläche von Pulverlacken sind weithin bekannt. So wurden bereits einzelne Komponenten der erfindungsgemäßen Zusammensetzung als Additive für Pulverlacke beschrieben. Diese Komponenten dienen jedoch nicht als PTFE-freie Strukturierungsmittel sondern modifizieren andere Eigenschaften des Pulverlacks.

Das Dokument CN112724799A offenbart einen Pulverlack umfassend ein modifiziertes Polyethylenwachs in einem Strukturierungsadditiv, das dem Pulverlack eine sandartige Oberfläche verleihen soll, sowie einen Bentonit, der nicht weiter modifiziert ist. Der Bentonit wird dem Pulverlack zugegeben um den Glanz einzustellen. Die Art der Modifikation des Polyethylenwachses ist nicht offenbart.

Die CN103160192 offenbart einen Pulverlack umfassend ein PTFE-modifiziertes Polyethylenwachs in mikronisierter Form, einen mikronisierten, organophilmodifizierten Bentonit und eine Vielzahl weiterer Komponenten. Somit betrachten die Erfinder eine PTFE-Modifikation für die Strukturierungseigenschaften als notwendig.

Eine Modifikation des Polyethylenwachses mit α,β-ungesättigter Carbonsäuren und/oder deren Derivaten wird nicht in Erwägung gezogen.

Die JP4818822B2 offenbart eine Thixotropierungsmittel bestehend aus einem oxidierten Polyethylenwachs und einem Bentonit und Beschichtungen umfassend dieses Thixotropierungsmittel.

EP3192821A1 offenbart ein Herstellungsverfahren für gepfropfte Polyolefine. Es wird erwähnt, dass diese in füllstoffverstärkten Harzzusammensetzungen, Kompatibilisatoren für Polymerlegierungen, Klebstoffen, Lacken, wässrige Dispersionen und Beschichtungsmaterialien eingesetzt werden können. Schichtsilikate als Strukturierungsmittel werden nicht erwähnt.

EP0982369A1 offenbart PAS Harze für elektrische und elektronische Komponenten, insbesondere für Zündspulengehäuse, denen Oxazolin-Gruppen enthaltende Polymere zugesetzt werden können, um die Haftung zu Epoxidharzen zu erhöhen und die Rissbeständigkeit der PAS Harze zu verbessern. Es werden keine gepfropfte Polyolefine offenbart und unmodifizierte Phyllosilicate werden nur als anorganische Füllstoffe beschrieben.

EP3875269A1 offenbart ein Laminat für Schläuche, bestehend aus einer Schicht aus einem schmelzbaren, formbaren Fluorharz und einer Schicht aus einer Ethylen-α-Olefin-nicht-konjugierten Polyen-Copolymer-Zusammensetzung. Das Fluorharz kann unmodifizierte Smektite als anorganische Füllstoffe enthalten.

Fluorierte Verbindungen sind als persistente Substanzen wachsender Kritik und Regulatorien ausgesetzt (POP, EU regulation 2019/1021). Diese können als Nebenprodukte in der Produktion oder Weiterverarbeitung von PTFE entstehen. Somit besteht das Bedürfnis PTFE-arme oder -freie Alternativen zur Strukturierung der Oberfläche von Pulverlacken zur Verfügung zu stellen. Zudem ist es vorteilhaft, wenn mit einem strukturierenden Additiv Strukturierungseffekte unterschiedlicher Stärke eingestellt werden können.

### Gegenstand der Erfindung

Es wurde nun überraschend gefunden, dass die Oberfläche eines Pulverlacks ohne Zugabe von PFTE deutlich strukturiert werden kann, wenn dem Lack vor dem Einbrennen eine Mischung aus einem mit einer α,β-ungesättigten Carbonsäure modifizierten Wachs und einem modifizierten Bentonit zugegeben wird.

Als Maß der Strukturierung einer Pulverlackoberfläche kann die Rauheitszahl (Rz) bestimmt werden, die die mittlere Rautiefe einer Oberfläche nach EN ISO 4287:1997 angibt. Je höher der Wert der Rauheitszahl ist, desto stärker ist die Strukturierung der Oberfläche.

Ein Gegenstand der Erfindung ist daher eine Zusammensetzung (C) umfassend als wesentliche Komponenten
(a) mindestens ein durch Aufpropfung α,β-ungesättigter Carbonsäuren und/oder deren Derivaten modifiziertes Wachs (mW); und
(b) einen modifiziertes Phyllosilikat (mP), bevorzugt ein organophil modifiziertes Phyllosilikat (omP),
die für eine Strukturierung der Oberfläche eines Pulverlacks sorgt, ohne dass die Zugabe von PTFE-haltigen Strukturierungsmitteln erforderlich ist.

Somit ist auch die Verwendung der Zusammensetzung (C) zur Strukturierung von Pulverlacken ein Gegenstand der Erfindung.

Ein weiterer Gegenstand der Erfindung ist ein Verfahren zur Herstellung einer erfindungsgemäßen Zusammensetzung (C) bei dem ein modifiziertes und ggf. mikronisiertes, Phyllosilikat (mP), ein durch Aufpropfung α,β-ungesättigter Carbonsäuren und/oder deren Derivaten modifiziertes und ggf. mikronisiertes, Wachs (mW) und optional weitere Komponenten durch Heißmischen, Extrudieren, Vermahlen oder Schütteln vermischt und ggf. mikronisiert werden.

Eine Pulverlackzusammensetzung (PC) umfassend
a) mindestens ein thermoplastisches oder nach dem Einbrennen duroplastisches Polymer
b) mindestens ein durch Aufpropfung α,β-ungesättigter Carbonsäuren und/oder deren Derivaten modifiziertes Wachs (mW); und
c) mindestens ein modifiziertes Phyllosilikat (mP)
ist ebenso ein Gegenstand der Erfindung, wie ein Verfahren zur Herstellung einer solchen Pulverlackzusammensetzung (PC), in dem alle für einen Pulverlack wesentlichen Komponenten gemeinsam mit (i) der Zusammensetzung (C) oder (ii) den Komponenten der Zusammensetzung (C) extrudiert und nachfolgend vermahlen werden. Alternativ kann (i) die mikronisierte Zusammensetzung (C) oder können (ii) die mikronisierten Komponenten der Zusammensetzung (C) mit der vermahlenen und ggf. gesiebten Pulverlackzusammensetzung vermischt werden.

### Detaillierte Beschreibung der Erfindung

### Modifiziertes Wachs (mW)

Das modifizierte Wachs, dass eine Komponente der Zusammensetzung (C) darstellt, kann grundsätzlich ein beliebiges Wachs sein. Beispielsweise kann das Wachs (W) ausgewählt sein aus der Gruppe bestehend aus synthetischen organischen Wachsen, teilsynthetischen organischen Wachsen, Naturwachsen (biobasierten Wachsen), und Mischungen davon, wobei das Wachs chemisch modifiziert ist. Die Modifizierung der unmodifizierten Wachse erfolgt durch Aufpfropfung α,β-ungesättigter Carbonsäuren und/oder deren Derivaten, etwa Acrylsäure oder Maleinsäureanhydrid.

Als Wachskomponente sind synthetische Kohlenwasserstoffwachse geeignet, z. B. Polyolefinwachse. Diese können durch thermischen Abbau verzweigter oder unverzweigter Polyolefin-Kunststoffe oder durch direkte Polymerisation von Olefinen hergestellt werden. Als Polymerisationsverfahren kommen z.B. radikalische Verfahren in Frage, wobei die Olefine, in der Regel Ethylen, bei hohen Drücken und Temperaturen zu mehr oder minder verzweigten Polymerketten umgesetzt werden; daneben kommen Verfahren in Betracht, bei denen Ethylen und/oder höhere 1-Olefine wie z. B. Propylen, 1-Buten, 1-Hexen etc. mit Hilfe metallorganischer Katalysatoren, beispielsweise Ziegler-Natta oder Metallocen-Katalysatoren, zu unverzweigten oder (kurzketten-)verzweigten Wachsen polymerisiert werden.

Entsprechende Methoden zur Herstellung von Olefin-Homo- und -Copolymerwachsen sind beispielsweise in Ullmann's Encyclopedia of Industrial Chemistry, 5. Auflage, Vol. A 28, Weinheim 1996 in Kapitel 6.1.1./6.1.2. (Hochdruckpolymerisation, (Wachse), Kapitel 6.1.2. (Ziegler-Natta-Polymerisation, Polymerisation mit Metallocen-katalysatoren) sowie Kapitel 6.1.4. (thermischer Abbau) beschrieben.

Für solche Wachse können auch nachhaltig erzeugten Polyolefine verwendet werden, die aus nachwachsenden oder recycelten Materialien gewonnen werden. In EP2352772 wird beispielsweise beschrieben, wie Polypropylenpolymere aus erneuerbaren Rohstoffen erzeugt werden. In US2022098490 wird ein Verfahren zur Herstellung von Polyolefinen aus Plastikabfällen beschrieben.

Weiterhin können sogenannte Fischer-Tropsch-Wachse eingesetzt werden. Diese werden katalytisch aus Synthesegas hergestellt und unterscheiden sich von Polyethylen-Wachsen durch niedrigere mittlere Molmassen, engere Molmassenverteilungen und niedrigere Schmelzviskositäten.

Weiterhin können biobasierte Wachse eingesetzt werden, bei denen es sich in der Regel um Esterwachse handelt. Im Allgemeinen werden unter biobasierten Wachsen jene Wachse verstanden, die auf einer nachwachsenden Rohstoffbasis aufbauen. Hierbei kann es sich sowohl um native als auch um chemisch modifizierte Esterwachse handeln. Typische native biobasierende Wachse sind beschrieben in Ullmann's Encyclopedia of Industrial Chemistry, 5. Auflage, Vol. A 28, 1996, Kapitel 2. Dazu gehören Palmwachse wie Carnaubawachs, Gräserwachse wie Candelillawachs, Zuckerrohrwachs und Strohwachse, Bienenwax, Reiswachs, etc..

Chemisch modifizierte Wachse gehen meist durch Oxidation (zum Beispiel durch ein Gemisch aus CrOs und H₂SO₄), Veresterung, Umesterung, Amidierung, Hydrierung, etc. aus den Esterwachsen oder pflanzenölbasierenden Fettsäuren hervor. Beispielweise fallen hierunter auch Metathese-Produkte von Pflanzenölen.

Zu den biobasierten Wachsen zählen darüber hinaus auch Montanwachse, entweder in unmodifizierter oder raffinierter bzw. derivatisierter Form. Detaillierte Angaben zu derartigen Wachsen finden sich z. B. in Ullmann's Encyclopedia of Industrial Chemistry, 5. Auflage, Vol. A 28, 1996, Kapitel 3. (Wachse).

In einer bevorzugten Ausführungsform ist das modifizierte Wachs (mW) ausgewählt aus der Gruppe bestehend aus Polyolefin-Wachsen, Montanwachs, Reiskleiewachs, Bienenwachs, Sonnenblumenwachs, Maiswachs, Carnaubawachs, Oxidate des Reiskleiewachs, Sonnenblumenwachs, Maiswachs, oder Carnaubawachs, Fischer-Tropsch-Wachsen, Paraffinwachsen, Esterwachsen und Amidwachsen,
Von diesen Wachsen sind Polyethylen-Wachs, Polypropylen-Wachs, Poly(ethylen-co-propylen)-Wachs und Oxidate des Reiskleiewachs, Maiswachs oder Sonnenblumenwachs besonders geeignet, da sie es sich um Wachse mit einem relativ hohen Schmelzpunkt handelt, die eine helle Eigenfarbe aufweisen. Solche Wachse sind besonders für Pulverlacke geeignet, da sie die optische Neutralität und chemische Stabilität aufweisen, die auf Grund des Herstellungsverfahrens für einen Pulverlack von Bedeutung sind.

Besonders bevorzugt sind Polyethylen-Wachs, Polypropylen-Wachs, Poly(ethylen-co-propylen)-Wachs, da es sich bei diesen um phasenvermittelnde Materialen handelt (unpolares Polymergrundgerüst mit polarer Pfropfung), die zwischen Bindemittel und Füllstoff agieren. der Modifikation durch Aufpropfung α,β-ungesättigter Carbonsäuren und/oder deren Derivaten besonders zugänglich sind kaum und unerwünschte Nebenreaktionen auftreten.

### Modifiziertes Phyllosilikat (mP)

Als Phyllosilikate bezeichnet man Silikate, deren Silikatanionen aus Schichten eckenverknüpfter SiO4-Tetraeder bestehen. Diese Schichten oder Doppelschichten sind untereinander nicht über weitere Si-O-Bindungen zu Gerüsten verknüpft.

Solche Phyllosilikate sind in natürlich vorkommenden Tonen enthalten. Tone werden nach dem dominierenden Mineralbestand klassifiziert. (z.B. Kaolinitton, smectitreicher Ton). Tone, in denen das dominierende Tonmineral ein Phillosilikat ist, werden dementsprechend nach diesem Phyllosilikat klassifiziert.

Ein Phyllosilikat im Sinne der Erfindung umfasst somit sowohl das reine Tonmineral welches ein Phyllosilikat ist, als auch einen Ton dessen dominierendes Tonmineral ein Phillosilikat ist.

Ebenso umfasst ein Organo-Dreischichtmineral im Sinne der Erfindung sowohl das reine Tonmineral, welches ein Organo-Dreischichtmineral ist, als auch einen Ton, dessen dominierendes Tonmineral ein Organo-Dreischichtmineral ist.

Dieselbe Definition gilt für alle aufgeführten Tonmineralien oder Klassen von Tonmineralien.

Ein technisch bedeutender Ton ist Bentonit. In der Geologie wird der Begriff Bentonit für eine Art von Tonstein (ein Tongestein, kein Tonmineral) verwendet, der hauptsächlich aus Montmorillonit (einem Tonmineral aus der Smektitgruppe) besteht. In kommerziellen und industriellen Anwendungen wird der Begriff Bentonit jedoch allgemeiner für alle quellfähigen Tone verwendet, die hauptsächlich aus Smektit-Tonmineralien (Montmorillonit, Beidellit, Nontronit) bestehen und daneben noch weitere Bestandteile wie Glimmer, Illit, Cristoballit und Zeolithe enthalten. Diese Definition von Bentonit gilt auch im Zusammenhang mit der in dieser Patentanmeldung beschriebenen Erfindung. Technisch wichtige Bentonite erfordern einen Montmorillonit-Gehalt von 60-80 %.

Phyllosilikate können durch kationischen oder anionischen Ionenaustausch modifiziert werden. Bevorzugt werden die Zwischenschicht-Kationen gegen andere Kationen ausgetauscht. So kann beispielsweise die Kationenbelegung der Zwischenschichten mittels alkalischer Aktivierung durch Na+ -Ionen ausgetauscht werden.

Bevorzugt sind Dreischichtmineralien (2:1-Schichtsilikate), deren kristallografische Struktur aus drei übereinanderliegenden Tetraeder-Oktaeder-Tetraeder-Schichten (TOT-Schichteneinheit) besteht.

Die 2:1-Schichtstruktur (TOT) zeigt zwei tetraedrischen (T) Siliziumdioxid- (SiO2) Schichten, die über eine oktaedrische (O) Mittelschicht aus Al2O3 oder Fe2O3 elektrostatisch vernetzt sind. Die TOT-Elementarschichten sind nicht starr miteinander verbunden, sondern durch einen freien Raum getrennt: die Zwischenschicht, die hydratisierte Kationen und Wassermoleküle enthält.

Besonders geeignet sind Dreischichtmineralien der Smectit-Gruppe. Zu diesen zählen beispielsweise Saponit, Hectorit, Montmorrilonit, Beidellit und Nontronit. Bevorzugt sind die dioktaedrische Smectite, wobei Montmorillonit-haltige Mineralien, wie sie beispielsweise in Bentonit vorkommen, besonders bevorzugt sind.

Die Eigenschaften der Dreischichtmineralien, insbesondere jene der Smectit-Gruppe, besonders bevorzugt jene des Bentonits, können durch Austausch der Kationen der Zwischenschichten modifiziert werden.

Ein Aktivbentonit beispielsweise ist ursprünglich ein Calciumbentonit, bei dem die originale Kationenbelegung der Zwischenschichten mittels alkalischer Aktivierung durch Na+ -Ionen ausgetauscht werden. Im Prinzip wird ein Calciumbentonit zu einem Natriumbentonit umgewandelt. In seinen physikalischen Eigenschaften ist er einem natürlichen Natriumbentonit sehr ähnlich. Ein solcher alkalisch aktivierter Bntonit kann in einer alternativen Ausführungsform der Erfindung eingestzt werden
Eine bevorzugte Ausführungsform betrifft organophil modifizierte Dreischichtmineralien. Ein solches Organo-Dreischichtmineral wird hergestellt indem organische Moleküle in die Zwischenschichten eingelagert oder aber die Kationen der Zwischenschichten gegen organische Moleküle ausgetauscht werden. Für die organischen Modifikation kommen organische Moleküle ausgewählt aus der Gruppe bestehend aus Polymeren (nichtionisch, kationisch oder anionisch), Alkylammoniumverbindungen, Alkohole wie beispielsweise Ethylenglykol, Methanol oder Glycerin und Kohlenhydrate in Frage.

Bevorzugt erfolgt die Modifiktion mit Alkylammoniumverbindungen, besonders bevorzugt mit quartären Alkylammoniumverbindungen. Durch diese Hydrophobierung zeigen die Zusammensetzungen (C) in Pulverlacken bessere Strukturierungseigenschaften, als es bei Zusammensetzungen (C) ohne eine organophile Modifikation des Phyllosilikats der Fall ist.

Als quarternäre Alkylammoniumverbindungen werden bevorzugt Dimethyldialkylammoniumionen oder Trimethylalkylammoniumionen eingesetzt.

Modifizierter Smektit oder modifizierter Hectorit sind innerhalb der modifizierten Dreischichtmineralien bevorzugt. Besonders bevorzugt ist organophil modifizierter Smektit oder Hectorit. Die Modifikation erfolgt vorzugsweise mit Alkylammoniumverbindungen, besonders bevorzugt mit quarternären Alkylammoniumverbindungen. Bevorzugte Beispiele sind Dimethyldistearylammonium-Hectorit, Dimethyldistearylammonium-Bentonit und mit Dimethyldistearylammonium modifizierter Montmorillonit. Kommerziell erhältliche Materialien sind BENTONE 38 V CG (Dimethyldistearylammonium-Hectorit) und BENTONE 34 (Dimethyldistearylammonium-Bentonit), beide erhältlich bei Elementis Specialties, sowie Claytone-40 (Stearinderivat des Bentonits) der Firma Byk. Es können ein, zwei oder mehr dieser organophil modifizierten Bentonite verwendet werden.

Ganz besonders bevorzugt wird als organophil modifizierter Smektit ein organophil modifizierter Bentonit eingesetzt. Ein organophil modifizierter Bentonit wird hergestellt, indem die Kationen der Zwischenschichten gegen Alkylammoniumionen, bevorzugt quartäre Alkylammoniumionen ausgetauscht werden. Durch diese Hydrophobisierung kann der Bentonit in unpolaren Flüssigkeiten quellen. Man bezeichnet diese Bentonite auch als "Bentone" oder "Organoclays". Typische Einsatzbereiche für solche Bentone sind die Fett- u. Schmiermittelverdickung und die Verdickung von Farben, indem der Bentone als Rheologiemodifizierungsmittel eingesetzt wird. Bevorzugte Beispiele sind BENTONE 34 (Dimethyldistearylammonium-Bentonit), der Firma Elementis Specialties, sowie Claytone-40 (Stearinderivat des Bentonits) der Firma Byk. Es können ein, zwei oder mehr dieser organophil modifizierten Bentonite verwendet werden.

### Physikalische Darreichungsformen

Die beiden wesentlichen Komponenten der Zusammensetzung (C), modifiziertes Wachs (mW) und modifiziertes Phyllosilikat (mP) können dem Pulverlack in verschiedenen Formen zugegeben werden. Sie können als Granulate oder Pulver vorliegen.

Bevorzugt liegt das modifizierte Wachs (mW) und das modifizierte Phyllosilikat (mP) in der Zusammensetzung (C) in mikronisierter Form vor.

Der Ausdruck "mikronisiert" bedeutet im vorliegenden Kontext, dass die (mittlere) Teilchengröße der betroffenen Substanz gegenüber dem Ausgangszustand verkleinert ist, und weniger als 1 Vol.-% der Teilchen eine Teilchengröße von 1000 µm oder höher aufweisen.

Teilchengrößen-Verteilungen können beispielsweise mit der Methode der Laserbeugung gemessen werden, wie sie beispielsweise in "A Guidebook to Particle Size Analysis" (Horiba Instruments, Inc., 2019) beschrieben ist. Ein hierfür geeignetes Messinstrument ist beispielsweise LA-960 der Firma Horiba Instruments, Inc., welches Teilchengrößen im Bereich von 10 nm bis 5 mm messen kann, oder Mastersizer 3000 der Firma Malvern Panalytical, welches Teilchengrößen im Bereich von 10 nm bis 3,5 mm messen kann.

Die mikronisierte Zusammensetzung (C) besitzt eine höhere Oberfläche als eine nicht mikronisierte Zusammensetzung (C) und lässt sich leichter und schneller mit dem Pulverlack in einem Extruder homogenisieren als eine nicht-mikronisierte Zusammensetzung (C), so dass der Pulverlackhersteller weniger Energie zur Herstellung des Pulverlacks aufwenden muss.

Bevorzugt ist eine Zusammensetzung (C), in der das modifizierte Phyllosilikat (mP) und das modifizierte Wachs (mW) einem Volumen-Medianwert D50 der Teilchengrößen von kleiner gleich 500µm, besonders bevorzugt von kleiner gleich 300µm aufweist.

In einer alternativen Ausführungsform ist das mikronisierte, modifizierte Phyllosilikat (mP) ganz oder teilweise mit dem modifizierten Wachs beschichtet.

Die mikronisierten, modifizierten Phyllosilikatpartikel lassen sich besonders wirkungsvoll mit modifiziertem Wachs (mW) heiß vermischen, woduch ein rieselfähiges, mit modifiziertem Wachs beschichtetes Mikronisat hergestellt wird.

Das modifizierte Phyllosilikats (mP) weist in dieser Ausführungsform bevorzugt einen Volumen-Medianwert D50 der Teilchengrößen von kleiner gleich 500µm, besonders bevorzugt von kleiner gleich 300µm auf.

Diese Ausführungsform ist besonders bevorzugt, da bei der Herstellung einer erfindungsgemäßen Pulverlackzusammensetzung (PC) durch Extrusion aller Komponenten des Pulverlacks und nachfolgender Vermahlung weniger Energie aufgewendet werden muss, als wenn die wesentlichen mikronisierten Komponenten der Zusammensetzung (C) der erfindungsgemäßen Pulverlackzusammensetzung (PC) getrennt oder auf eine der anderen Arten vermischt zugegeben werden. Die erfindungsgemäße Herstellung eines Pulverlacks wird weiter unten näher beschrieben.

### Bevorzugte Zusammensetzungen

PTFE-freie Zusammensetzungen sind besonders umweltverträglich, so dass PTFE-freie Zusammensetzungen (C), die einen ausreichenden Strukturierungseffekt im eingebrannten Pulverlack bewirken, ökologisch gegenüber PTFE-haltigen Zusammensetzungen deutlich bevorzugt sind.

In einer bevorzugten Ausführungsform umfasst die Zusammensetzung (C) liegen das modifizierte Wachs (mW) und der modifizierte Bentonit (mB), bevorzugt der organophil modifizierte Bentonit (omB) in einem Verhältnis zwischen 4:1 bis 1:3, bevorzugt zwischen 3,5:1 und 1:2, besonders bevorzugt zwischen 3:1 und 1:1,5, ganz besonders bevorzugt zwischen 3:1 und 1:1 vor.

Eine Zusammensetzung (C), die neben den zur Strukturierung wesentlichen Komponenten modifiziertes Wachs (mW) und modifiziertes Phyllosilikat (mP) ein anorganisches Additiv, bevorzugt ein oder mehrerer basischen Metallverbindungen aus der Gruppe der (Halb-)Metalloxide, -sulfate, -hydroxide, der Halbmetalloxide, - sulfate, -hydroxide, mehr bevorzugt ausgewählt aus Sulfaten der Erdalkalimetalle oder Oxiden der Metalle der 4. Nebengruppe, besonders bevorzugt ausgewählt aus Bariumsulfat, pyrogener Kieselsäure und Titandioxid, umfasst, ist besonders wirkungsvoll, da eine solche Zusammensetzung den Strukturierungseffekt noch verstärkt.

Die erfindungsgemäße Zusammensetzung (C) kann zusätzlich Stabilisatoren, Additive und/oder Fließhilfsmittel enthalten, wie beispielsweise primäre und sekundäre Antioxidantien (z.B. HALS-Verbindungen), oder pyrogene Kieselsäure.

### Herstellungsverfahren und Verwendung der erfindungsgemäßen Zusammensetzung

Die erfindungsgemäße Zusammensetzung (C) wird hergestellt, indem die Komponenten durch Heißmischen, Extrudieren, Vermahlen oder Schütteln vermischt und dabei je nach Verfahren ggf. gleichzeitig mikronisiert werden, wobei unter mikronisieren eine Zerkleinerung auf mittlere Teilchengrößen kleiner gleich 1000 µm verstanden wird. Dementsprechend betrifft ein weiterer Gegenstand der Erfindung ein Verfahren zur Herstellung einer erfindungsgemäßen Zusammensetzung (C) umfassend die Schritte
a) Bereitstellen eines modifizierten, ggf. mikronisierten Phyllosilikats (mP), des ggf. mikronisierten Wachses (mW) und optional weiterer Komponenten
b) Vermischen und ggf. Mikronisieren der im Schritt a) bereitgestellten Komponenten vorzugsweise durch Vermengen, Heißmischen, Extrudieren oder Vermahlen.

Unter Vermengen wird das physikalische Mischen beispielsweise durch Rühren, Schütteln oder Verwirbeln verstanden.

Das Heißmischen betrifft ein bevorzugtes Verfahren zur Herstellung einer Zusammensetzung (C) umfassend die Schritte
a) Bereitstellen und Vermischen des mikronisierten, modifizierten Phyllosilikats (mP) und des modifizierten Wachses (mW)
b) Erwärmen des modifizierten Wachses (mW) auf eine Temperatur, die im Schmelzbereich des Wachses liegt bei gleichzeitigem Rühren
c) Vermischen der Komponenten durch Rühren.

Ein weiterer Gegenstand der Erfindung betrifft die Verwendung der erfindungsgemäßen Zusammensetzung (C) zur Strukturierung von Pulverlacken. Durch Verwendung der Zusammensetzung (C) in Pulverlacken kann die Oberfläche von Pulverlacken mit weniger oder ohne PTFE-haltige Komponenten strukturiert werden.

### Pulverlackzusammensetzung (PC)

Ein weiterer Gegenstand der Erfindung ist eine Pulverlackzusammensetzung (PC) umfassend
a) mindestens ein thermoplastisches oder nach dem Einbrennen duroplastisches Polymer
b) mindestens ein durch Aufpropfung α,β-ungesättigter Carbonsäuren und/oder deren Derivaten modifiziertes Wachs (mW); und
c) mindestens einen ggf. mikronisiertes, modfiziertes Phyllosilikat (mP).

Die Komponente a) stellt das Bindemittel dar.

Vorzugsweise umfasst die Pulverlackzusammensetzung (PC), als Bindemittel ein nach dem Einbrennen duroplastisches Polymer, das ausgewählt ist aus der Gruppe bestehend aus Epoxidharz, Epoxidharz-/Polyester-Hybridsysteme, reaktive Polyester und reaktive Acrylate, bevorzugt aus der Gruppe bestehend aus Epoxidharz-/Polyester-Hybridsysteme und Hydroxyalkylamiden.

In duroplastischen Pulverlacken ist die durch die Zusammensetzung (C) erzeugte Struktur auch bei erhöhter Temperatur stabil, wohingegen thermoplastische, strukturierte Pulverlacke oberhalb der Schmelztemparatur als Beschichtung verformbar sind.

Eine weitere Verstärkung der Strukturierung der Oberfläche ist möglich, indem der Pulverlackzusammensetzung (PC) ein oder mehrerer basischen Metallverbindungen aus der Gruppe der (Halb-)Metalloxide, -sulfate, oder -hydroxide, mehr bevorzugt ausgewählt aus Sulfaten der Erdalkalimetalle oder Oxiden der Metalle der 4. Nebengruppe, besonders bevorzugt ausgewählt aus Bariumsulfat, pyrogene Kieselsäure und Titandioxid, zugesetzt wird. Diese basische Metallverbindungen können bereits als Pigment oder Füllstoff in der Pulverlackzusammensetzung vorhanden sein oder werden dieser zusätzlich zugegeben.

Durch Zugabe der Zusammensetzung (C) zur Pulverlackzusammensetzung (PC) kann eine hohe Rauhigkeitzahl Rz (gemittelte Rautiefe) und damit ein intensiver Strukturierungseffekt erzielt werden

Die Stärke des Strukturierungseffekt läßt sich auf vorteilhaftere Weise einstellen, als es bei PTFE-haltigen Strukturierungsadditiven der Fall ist, indem die Zugabemengen einem Bereich zwischen 0,5 Gew.-% und 10 Gew.-%, bevorzugt zwischen 2 und 8 Gew.-%, bezogen auf die Masse der gesamten Pulverlackzusammensetzung (PC), gewählt wird. Bei PTFE-haltigen Strukturierungsadditiven hingegen stellt sich schon bei sehr geringen Zugabemengen ein starker Strukturierungseffekt ein, der sich nicht so gut justieren lässt.

Für die Rauhigkeit der Oberfläche der Pulverlackzusammensetzung (PC) ist von Bedeutung in welchem Verhälntnis, die wesentlichen Komponenten der Zusammensetzungen (C) vorliegen. Eine hohe Rauigkeitszahl wird erreicht, wenn das Verhältnis von dem Wachs (mW) zu dem Bentonit (omB) zwischen 4:1 bis 1:3, bevorzugt zwischen 3,5:1 und 1:2, besonders bevorzugt zwischen 3:1 und 1:1,5, ganz besonders bevorzugt zwischen 3:1 und 1:1 liegt.

Pulverlacke die wenig PTFE enthalten sind umweltverträglicher als jene mit einem höheren PTFE-Gehalt. Deshalb sind Pulverlackzusammensetzungen (PC) die weniger als 1 Gew.% PTFE, bevorzugt 0,5 Gew.-%, besonders bevorzugt 0,1% und ganz besonders bevorzugt kein PTFE enthalten ein bevorzugter Gegenstand der Erfindung.

Die erfindungsgemäße Pulverlackzusammensetzung (PC) wird durch ein Verfahren zur Herstellung einer Pulverlackzusammensetzung (PC) umfassend die Schritte
a) Bereitstellen aller notwendigen Komponenten einer Pulverlackzusammensetzung und der Zusammensetzung (C) oder der einzelnen Komponenten, die die Zusammensetzung (C) umfasst.
b) Vermischen der in Schritt a) bereitgestellten Komponenten durch Extrudieren
c) Vermahlen der in Schritt b) bereitgestellten extrudierten Pulverlackzusammensetzung
hergestellt.

Optional kann die vermahlene Pulverlackzusammensetzung aus Schritt c) nachfolgend gesiebt werden.

In einer alternativen Ausführungsform kann (i) die Zusammensetzung (C) oder (ii) die einzelnen Komponenten der Zusammensetzung (C) der Pulverlackzusammensetzung (PC) nach Verfahrenschritt c) zugegeben werden und mit dieser vermengt werden.

### Experimenteller Teil:

Die Beispiele zeigen einige bevorzugte Ausführungsformen der Erfindung.

**Tabelle 1: Methoden zur Bestimmung der angegebenen Parameter**

| Parameter | Methode |
|---|---|
| Dichte [g/cm³] | ISO 1183-3 |
| Säurezahl (SZ) [mg KOH/g] | ISO 2114 |
| Tropfpunkt (TP) [°C] | ISO 2176 |
| Schmelzbereich [°C] | ISO 11357 Part 2-3: Die Bestimmung des Schmelzbereiches wird aus der ersten Aufheizkurve (N2, 0 - 200°C, 5K/min) bestimmt. Der Bereich wird über den gesamten endothermen Schmelzbereich integriert und damit die Grenzen des Bereiches definiert. |
| D50 | ISO 13320-1 |
| Gemittelte Rautiefe R_{z} (Rauheitszahl) [µm] | Die Bestimmung der Rauheitszahl R_{z} (gemittelte Rautiefe) wurde mit einem Gerät Surftest SJ-210 der Firma Mitutoyo mit einem 0,75 mN-Messkopf in Übereinstimmung mit EN ISO 4287:1997 durchgeführt. Die Kopfgeschwindigkeit betrug 0,5 mm/s. Das arithmetische Mittel wurde aus 5 Einzelwerten erstellt. |
| Glanz @ 60° | Die Bestimmung des Glanzgrades erfolgte mit einem micro-TRI--gloss-µ-Glanzmessgerät (BYK-Gardner GmbH) |
| Gleitreibung | Der Gleitreibungskoeffizient wurde mit einem Friction-Peel Tester, Model 225-1, der Firma Thwing-Albert Instruments Company in Anlehnung an die ASTM-Methode D2534 ermittelt. Dazu wurde eine mit dem zu testenden Lack beschichtete Glasplatten auf das Analysengerät aufgebracht. Anschließend wurde ein mit Leder bezogener Metallschlitten (349 g) auf die beschichtete Oberfläche aufgesetzt. Der Schlitten wurde anschließend mit konstanter Geschwindigkeit (15 cm/min) über die beschichtete Glasoberfläche gezogen. Gemessen wurde die Kraft, die benötigt wird, um den Schlitten zu ziehen. Da der dynamische Gleitreibungskoeffizient ermittelt wurde, konnte die Anfangskraft, welche benötigt wird, um den Schlitten in Bewegung zu setzen, vernachlässigt werden. |

### Ausführung der Beispiele:

**Tabelle 2: Verwendete Substanzen und Zusammensetzungen**

| Bezeichnung | Produktname | Hersteller | Substanz / Zusammensetzung | SZ [mg KOH/g] | D50 [µm] | Schmelzbereich [°C] | TP [°C] |
|---|---|---|---|---|---|---|---|
| W1 | Licocene PE MA 4351 FG | Clariant | MA-gegraftetes PE-Homopolymer; hoher Mahlgrad | 42 - 49 | 186 | 30 - 124 | 108 - 113 |
| W2 | Licocene PE 4201 | Clariant | PE-Homopolymer | 0 | 94 | 50 - 135 | 125 - 130 |
| W3 | Licowax PED 136 | Clariant | Luft-oxidiertes PE | 57 - 64 | 309 | 28 - 120 | 108 - 113 |
| W4 | Ceridust 3942 F | Clariant | PTFE modifiziertes Polyethylenwax | 0 | 12 - 15 | 72 - 136 | 124 - 129 |
| B1 | Claytone-40 | BYK | organophil modifizierter Bentonit | - | 12 - 18 | - | - |
| B2 | Bentone-34 | Elementis | organophil modifizierter Bentonit | - | 18 | - | - |
| B3 | Tonsil 210 FF | Clariant | sauer aktivierter (HCl/H2SO4) bayrischer Bentonit | - | 13 - 50 | - | - |
| B4 | Opazil ABG | Clariant | alkalisch (5% Na2CO3) aktivierter Bentonit | - | 7,5 - 10 | - | - |
| B5 | Tonsil 919 FF | Clariant | Natrium aktivierter Bentonit | - | 29 - 31 | - | - |
| Z1 | Hotmix 1 (128922) | | Mischung aus W1 und B1 (2:1); heiß vermischt im Heißmischer | | 180 | | |
| Z2 | Hotmix 2 (128920) | | Mischung aus W1 und B1 (1:1); heiß vermischt im Heißmischer | | 179 | | |
| Z3 | Hotmix 3 (128921) | | Mischung aus W1 und B1 (1:2); heiß vermischt im Heißmischer | | 76 | | |
| Z4 | Hotmix 4 (130610) | | Mischung aus W1 und B2 (1:1); heiß vermischt im Heißmischer | | 254 | | |
| L3 | Hybrid blau Crylcoat 2617-3 | Allnex | Säurefunktioneller Polyester | - | - | - | - |
| | Primid XL 552 | EMS Griltech | Vernetzer | - | - | - | - |
| | Additol P824 | Allnex | Modifiziertes gesättigtes Polyesterharz | - | - | - | - |
| | Benzoin | Sigma Aldrich | α-Hydroxy-α-phenylacetophenone | - | - | - | - |
| | Kronos 2310 | Kronos Titan GmbH | Titandioxid | - | - | - | - |
| | Hostaperm Blau A4R | Clariant | Blaupigment | - | - | - | - |
| L1, L2 | Primid blau Crylcoat 1770-0 | Allnex | Blauer Primidlack Gesättigtes carboxiliertes Polyesterharz | - | - | - | - |
| | D.E.R. 663U-E | Dow Deutschland Inc. | Bisphenol-A basierendes Epoxidharz | - | - | - | - |
| | Additol P 896 | Allnex | Modifiziertes gesättigtes Polyesterharz | - | - | - | - |
| | Blancfixe F | Sachtleben Minerals | Titandioxid | - | - | - | - |
| | Kronos 2160 | Kronos Titan GmbH | Titandioxid | - | - | - | - |
| | PV-Echtblau A2R | Clariant | Blaupigment | - | - | - | - |

### Herstellung der erfindungsgemäßen Zusammensetzungen (C):

Die Zusammensetzungen Z1 bis Z4 wurden durch Heißmischen mit Hilfe eines Günther Papenmeier KG Typ TLHK3 Turbo Fluidmischer BJ 1968 hergestellt. Hierzu wurden jeweils das modifizierte Wachses (mW) und der organophil modifizierte Bentonit (omB) in den entsprechenden Verhältnissen eingewogen und unter Rühren miteinander vermengt. Anschließend wurde das Gemenge unter Rühren auf eine Temperatur innerhalb des Schmelzbereichs des Wachses erwärmt, 10 min weiter gerührt und anschließend unter Rühren erkalten gelassen.

Die Komponenten W und B aus Tabelle 2 wurden durch Schütteln vermischt, bevor sie einer Pulverlackzusammensetzung zugegeben wurden. Alternativ wurden die Komponenten der Pulverlackzusammensetzung direkt zugegeben.

### Herstellung der erfindungsgemäßen Pulverlackzusammensetzungen (PC) und des entsprechenden Lacks:

Die jeweiligen in den Tabellen 3-5 angegebenen Komponenten wurden in einem Mischer 3 min bei maximaler Leistung vorgemischt und danach im Extruder bei ca. 110°C (Extrudertemp.) gemischt. Dabei wurde darauf geachtet, dass die Produkttemperatur 140°C nicht überschreitet.

### Extrudereinstellungen:

A) Primid-System

| | | | |
|---|---|---|---|
| Zone 1 | Zone 2 | Zone 3 | Zone 4 |
| RT | 90°C | 100°C | 100°C |

B) Hybrid-System:

| | | | |
|---|---|---|---|
| Zone 1 | Zone 2 | Zone 3 | Zone 4 |
| RT | 90°C | 110°C | 110°C |

Anschließend wurde der Pulverlack gemahlen und auf kleiner 125 µm abgesiebt. Dabei sollte der D50-Wert bei ca. 40 - 45 µm liegen. Anschließend wurde die Pulverlackzusammensetzung auf ein metallisches Substrat (Aluminium) aufgesprüht.

Der Pulverlack wird bei 180 °C für 15 min eingebrannt.

**Tabelle 3: Rezeptur des farbigen Hybridsystems L1**

| **Bestandteile** | **ohne** | **4,0** % **Anteil** |
|---|---|---|
| Crylcoat 1770-0 | 424 | 407,0 |
| D.E.R. 663U-E | 182 | 174,7 |
| Additol P 896 | 40 | 38,4 |
| Benzoin | 3,3 | 3,2 |
| Blancfixe F | 87,5 | 84 |
| Kronos 2160 (TiO2) | 245 | 245 |
| PV-Echtblau A2R | 17,5 | 17,5 |
| W+B oder Z (s. Tab 6) | -- | 40 |

**Tabelle 4: Strukturierende Komponente (SC) in L1 (Hybrid blau)**

| Beispiel | SC in (PC) | Rz [µm] | | Gloss 60° | |
|---|---|---|---|---|---|
| | Anteil (SC) in Gew.-% | 0 | 4 | 0 | 4 |
| 1 (vgl.) | Ohne C | 0,64 | | 97,5 | |
| 2 (vgl.) | W1 | | 11,1 | | 20,1 |
| 3 (vgl.) | B1 | | 12,52 | | 21,6 |
| 4 (erf.) | Z2 (W1 + B1, 1:1) | | 13,96 | | 17,0 |
| 5 (erf.) | W1 + B1, 3:1 | | 20,99 | | 8,3 |
| 6 (erf.) | W1 + B1, 1:1 | | 19,45 | | 8,3 |
| 7 (erf.) | W1 + B1, 1:3 | | 13,39 | | 15,5 |
| 8 (erf.) | W1 + B2, 1:1 | | 17,17 | | 12,0 |
| 9 (erf.) | Z4 (W1 + B2, 1:1) | | 14,14 | | 16,2 |
| 10 (erf.) | W1 + B3, 1:1 | | 10,12 | | 24,9 |
| 11 (erf.) | W1 + B4, 1:1 | | 7,38 | | 35,0 |
| 12 (erf.) | W1 + B5, 1:1 | | 7,28 | | 41,4 |
| 13 (vgl.) | W2 + B1, 1:1 | | 3,78 | | 69,7 |
| 14 (vgl.) | W3 + B1, 1:1 | | 5,42 | | 67,5 |
| | | | | | |

| | Anteil (SC) in Gew.-% | | 3 | | |
|---|---|---|---|---|---|
| 15 (erf.) | W4 + Z2 (1:2) | | 51,5 | | 1,5 |
| 16 (vgl.) | W4 + W1 (1:2) | | 47,9 | | 1,9 |
| 17 (vgl.) | W4 + B1 (1:2) | | 42,15 | | 1,7 |

Tabelle 4 zeigt, dass Zusammensetzungen (C) aus MA-gepfropftem Wachs in Kombination mit organophil modifiziertem Bentonit höhere Rauigkeitszahlen Rz erzeugen (Bsp. 4- 9) als die beiden Komponenten allein (Bsp. 2 und 3). Zusammensetzungen, die anstatt des organophil modifizierten Bentonits, anderweitig modifizierte Bentonite enthalten, erzeugen einen geringeren Strukturierungseffekt (Bsp 10 -12). Wie in Bsp. 13 und 14 gezeigt, spielt die Funktionalität der eingesetzten Wachse eine besondere Rolle bei der Erzeugung von Strukturierungen. Sowohl Bsp. 13, welches ein unfunktionalisiertes Wachs enthält als auch Bsp. 14, welches ein polares Polyolefin enthält, zeigen keinen Strukturierungseffekt. Die Art der Modifikation des Polyolefins spielt also eine entscheidende Rolle bei der Erzeugung der Strukturierung. Eine besonders starke Strukturierung kann erzielt werden, wenn die Zusammensetzung (C) zusätzlich gewisse Mengen an PTFE enthält.

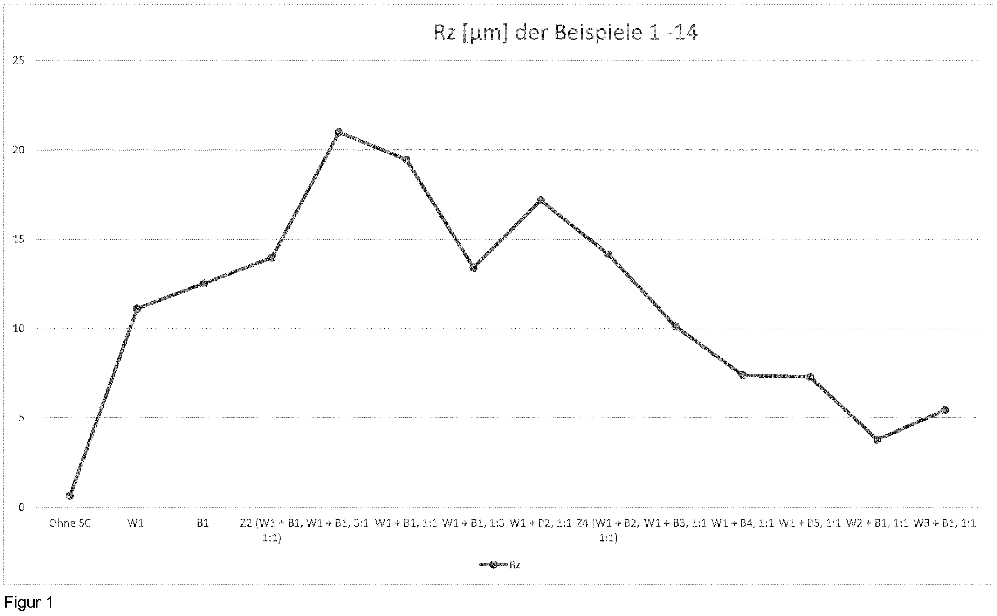

Eine grafische Auftragung der Rauheitszahlen der Pulverlackszusammensetzungen (PC) in L1 ohne PTFE sind der Fig. 1 zu entnehmen.

**Tabelle 5: Rezeptur des weißen Hybridsystems L2**

| **Bestandteile** | **1,0** % **Anteil** | **2,0** % **Anteil** | **4,0** % **Anteil** |
|---|---|---|---|
| Crylcoat 1770-0 | 420,50 | 416,2 | 407,9 |
| D.E.R. 663U-E | 180,20 | 178,4 | 174,8 |
| Additol P 896 | 39,60 | 39,2 | 38,4 |
| Benzoin | 3,30 | 3,2 | 3,2 |
| Blancfixe F | 86,60 | 85,8 | 84,0 |
| Kronos 2160 | 259,80 | 257,2 | 252,0 |
| W + B oder Z(s. Tab. 8) | 10 | 20 | 40 |

**Tabelle 6: Strukturierende Komponente (SC) in L2 (Hybrid weiß)**

| Beispiel | SC in (PC) | Rz [µm] | | |
|---|---|---|---|---|
| | Anteil (C) in Gew.-% | 0 | 2 | 4 |
| 18 (erf.) | Z 2 (W1 + B1; 1:1) | 0,41 | 2,72 | 15,94 |
| | | | | |

| | Anteil SC in Gew.-% | 1 | | |
|---|---|---|---|---|
| 19 (vgl.) | W4 | 12,77 | | |

Im weißen Hybridlack lassen sich durch Zugabe von 4 Gew.-% der erfindungsgemäßen Zusammensetzung Z2 stärkere Strukturierungseffekte erzielen als mit den üblichen Mengen an PTFE-haltigem Additiv. (s. Tabelle 6)

**Tabelle 7: Rezeptur des Primidsystems L3**

| **Bestandteile** | **ohne** | **1,0 % Anteil** | **2,0 % Anteil** | **4,0 % Anteil** |
|---|---|---|---|---|
| **Crylcoat 2617-3** | 584,0 g | 575,0 g | 566,0 g | 560,64 |
| **Primid XL 552** | 31,0 g | 30,5 g | 30,0 g | 29,76 |
| **Additol P 824** | 30,0 g | 29,5 g | 29,1 g | 28,8 |
| **Benzoin** | 5,0 g | 5,0 g | 4,9 g | 4,8 |
| **Kronos 2310** | 340,0 g | 340,0 g | 340,0 g | 340 |
| **Hostaperm-Blau A4R** | 10,0 g | 10,0 g | 10,0 g | 10 |
| W+B oder Z (s. Tab. 4) | -- | 10,0 g | 20,0 g | 40 |

**Tabelle 4: Strukturierende Komponente (SC) in L3 (Primid blau)**

| Beispiel | SC in (PC) | Rz [µm] | | Slide | | Gloss 60° | |
|---|---|---|---|---|---|---|---|
| | Anteil (C) in Gew.-% | 2 | 4 | 2 | 4 | 2 | 4 |
| 20 (vgl.) | 0 | | | | | | |
| 21 (erf.) | Z 1 (W1 + B1; 2:1) | 7,05 | 16,24 | 0,63 | 0,47 | 42,5 | 11,3 |
| 22 (erf.) | Z 2 (W1 + B1; 1:1) | 2,80 | 13,06 | 0,73 | 0,47 | 87,7 | 18,8 |
| 23 (erf.) | Z 3 (W1 + B1; 1:2) | 1,83 | 9,98 | 0,73 | 0,51 | 97,9 | 31,0 |
| | | | | | | | |

| | Anteil SC in Gew.-% | 1 | | 1 | | 1 | |
|---|---|---|---|---|---|---|---|
| 24 (vgl.) | W4 | 13,97 | | | 0,55 | | 11,8 |

Aus Tabelle 4 geht hervor, dass durch Zugabe der Zusammensetzung (C) eine Strukturierung des Pulverlacks erreicht werden kann und diese je nach Zugabemenge der Zusammensetzung (C) eingestellt werden können. Weiterhin ist zu beobachten, dass bei einem Verhältnis von modifiziertem Wachs (mW) zu modifiziertem Bentonit (mB) von 2:1 (Bsp. 1, Z1) stärkere Strukturierungseffekte erzielt werden können als bei Zusammensetzungen (C), die ein niedrigeres Verhältnis aufweisen (Bsp. 2-3).

## Patentansprüche

1. Zusammensetzung (C) zur Strukturierung von Pulverlacken, umfassend
(a) mindestens ein durch Aufpropfung α,β-ungesättigter Carbonsäuren und/oder deren Derivaten modifiziertes Wachs (mW); und
(b) ein modifiziertes Phyllosilikat (mP), bevorzugt ein organophil modifiziertes Phyllosilikat (omP).

2. Zusammensetzung (C) gemäß Anspruch 1, **dadurch gekennzeichnet, dass** das modifizierte Phyllosilikat (mP) ein modifiziertes Dreischichtmineral, bevorzugt ein modifizierter Smektit oder ein modifizierter Hectorit, besonders bevorzugt ein modifizierter Bentonit (mB), ganz besonders bevorzugt ein organophil modifizierter Bentonit (omB) ist.

3. Zusammensetzung (C) gemäß Anspruch 1 oder 2, **dadurch gekennzeichnet, dass** das modifizierte Phyllosilikat (mP) organophil modifiziert, bevorzugt mit Alkylammoniumverbindungen modifiziert, besonders bevorzugt mit quarternären Alkylammoniumverbindungen modifiziert ist.

4. Zusammensetzung (C) gemäß einem der vorhergehenden Ansprüche, **dadurch gekennzeichnet, dass** das modifizierte Wachs (mW) und das modifizierte Phyllosilikat (mP) in mikronisierter Form vorliegen oder dass das modifizierte Phyllosilikat (mP) ganz oder teilweise mit dem modifizierten Wachs (mW) beschichtet ist.

5. Zusammensetzung (C) gemäß einem der vorhergehenden Ansprüche, wobei das modifizierte Wachs (mW) ausgewählt ist aus der Gruppe bestehend aus synthetischen organischen Wachsen, teilsynthetischen organischen Wachsen, Naturwachsen, und Mischungen davon, bevorzugt ausgewählt aus Polyolefin-Wachsen, Montanwachs, Reiskleiewachs, Bienenwachs, Sonnenblumenwachs, Maiswachs, Carnaubawachs, Fischer-Tropsch-Wachsen, Paraffinwachsen, Esterwachsen und Amidwachsen, mehr bevorzugt ausgewählt aus Polyethylen-Wachs, Polypropylen-Wachs, Poly(ethylen-co-propylen)-Wachs, Reiskleiewachs, Maiswachs und Sonnenblumenwachs, mehr bevorzugt aus Polyethylen-Wachs, Polypropylen-Wachs, Poly(ethylen-co-propylen)-Wachs.

6. Zusammensetzung (C) gemäß einem der vorhergehenden Ansprüche, **dadurch gekennzeichnet, dass** das Gewichtsverhältnis von dem modifizierten Wachs (mW) zu dem modifizierten Phyllosilicat (mP), bevorzugt zu dem modifizierten Bentonit (mB), besonders bevorzugt zu dem organophil modifizierten Bentonit (omB) zwischen 4:1 bis 1:3, bevorzugt zwischen 3,5:1 und 1:2, besonders bevorzugt zwischen 3:1 und 1:1,5, ganz besonders bevorzugt zwischen 3:1 und 1:1 liegt.

7. Zusammensetzung (C) gemäß einem oder mehreren der vorhergehenden Ansprüche, **dadurch gekennzeichnet, dass** diese ein anorganisches Additiv, bevorzugt ein oder mehrerer basischen Metallverbindungen aus der Gruppe der (Halb-)Metalloxide, -sulfate, oder -hydroxide, mehr bevorzugt ausgewählt aus Sulfaten der Erdalkalimetalle oder Oxiden der Metalle der 4. Nebengruppe, besonders bevorzugt ausgewählt aus Bariumsulfat, pyrogene Kieselsäure und Titandioxid, umfasst.

8. Zusammensetzung (C) gemäß einem oder mehreren der vorhergehenden Ansprüche, **dadurch gekennzeichnet, dass** die Zusammensetzung (C) weniger als 1 Gew.% **PTFE,** bevorzugt 0,5 Gew.-%, besonders bevorzugt 0,1 Gew.-%, ganz besonders bevorzugt kein **PTFE** enthält.

9. Verfahren zur Herstellung einer Zusammensetzung (C) gemäß einem der vorhergehenden Ansprüche 1-8 umfassend die Schritte
a) Bereitstellen eines ggf. mikronisierten, modifizierten Phyllosilikats (mP), des modifizierten, ggf. mikronisierten Wachses (mW) und optional weiterer Komponenten
b) Vermischen und ggf. Mikronisieren der im Schritt a) bereitgestellten Komponenten vorzugsweise durch Vermengen, Heißmischen, Extrudieren oder Vermahlen .

10. Verfahren zur Herstellung einer Zusammensetzung (C) gemäß Anspruch 9 umfassend die Schritte
a) Bereitstellen und Vermischen des mikronisierten, modifizierten Phyllosilikats (mP) und des modifizierten Wachses (mW);
b) Erwärmen des modifizierten Wachses (mW) auf eine Temperatur, die im Schmelzbereich des Wachses liegt, bei gleichzeitigem Rühren;
c) Vermischen der Komponenten durch Rühren.

11. Verwendung der Zusammensetzung (C) gemäß einem der vorhergehenden Ansprüche zur Strukturierung von Pulverlacken.

12. Pulverlackzusammensetzung (PC) umfassend
a) mindestens ein thermoplastisches oder nach dem Einbrennen duroplastisches Polymer
b) die Zusammensetzung (C).

13. Pulverlackzusammensetzung (PC) gemäß Anspruch 12, **dadurch gekennzeichnet, dass** das nach dem Einbrennen duroplastische Polymer ausgewählt ist aus der Gruppe bestehend aus Epoxidharz, Epoxidharz-/Polyester-Hybridsysteme, reaktive Polyester oder reaktive Acrylate, bevorzugt aus der Gruppe bestehend aus Epoxidharz-/Polyester-Hybridsysteme und Hydroxyalkylamiden.

14. Pulverlackzusammensetzung (PC) gemäß einem oder mehreren der Ansprüche 12 - 13, **dadurch gekennzeichnet, dass** diese ein anorganisches Additiv, bevorzugt ein oder mehrerer basischen Metallverbindungen aus der Gruppe der (Halb-)Metalloxide, -sulfate, und -hydroxide, mehr bevorzugt ausgewählt aus Sulfaten der Erdalkalimetalle und Oxiden der Metalle der 4. Nebengruppe, besonders bevorzugt ausgewählt aus Bariumsulfat, pyrogene Kieselsäure und Titandioxid, umfasst.

15. Pulverlackzusammensetzung (PC) gemäß einem oder mehreren der Ansprüche 12 - 14, **dadurch gekennzeichnet, dass** die Menge der Zusammensetzung (C) in der Pulverlackzusammensetzung (PC) zwischen 0,5 Gew.-% und 10 Gew.-%, bevorzugt zwischen 2 und 8 Gew.-%, bezogen auf die Masse der gesamten Pulverlackzusammensetzung (PC), liegt.

16. Pulverlackzusammensetzung (PC) gemäß einem oder mehreren der Ansprüche 12 - 15, **dadurch gekennzeichnet, dass** das Gewichtsverhältnis von dem modifizierten Wachs (mW) zu dem modifizierten Phyllosilicat (mP), bevorzugt zu dem modifizierten Bentonit (mB), besonders bevorzugt zu dem organophil modifizierten Bentonit (omB) zwischen 4:1 bis 1:3, bevorzugt zwischen 3,5:1 und 1:2, besonders bevorzugt zwischen 3:1 und 1:1,5, ganz besonders bevorzugt zwischen 3:1 und 1:1 liegt.

17. Pulverlackzusammensetzung (PC) gemäß einem oder mehreren der Ansprüche 12 - 16, **dadurch gekennzeichnet, dass** die Pulverlackzusammensetzung (PC) weniger als 1 Gew.% PTFE, bevorzugt 0,5 Gew.-%, besonders bevorzugt 0,1%, ganz besonders bevorzugt kein PTFE enthält.

18. Verfahren zur Herstellung einer Pulverlackzusammensetzung (PC) gemäß einem der Ansprüche 12 - 17 umfassend die Schritte
a) Bereitstellen aller notwendigen Komponten einer Pulverlackzusammensetzung und (i) der Zusammensetzung (C) oder (ii) der einzelnen Komponenten, die die Zusammensetzung (C) umfasst;
b) Vermischen der in Schritt a) bereitgestellten Komponenten durch Extrudieren;
c) Vermahlen der in Schritt b) extrudierten Pulverlackzusammensetzung
d) Optionales Sieben der vermahlene Pulverlackzusammensetzung aus c).

19. Verfahren zur Herstellung einer Pulverlackzusammensetzung (PC) gemäß einem der Ansprüche 12 - 17 umfassend die Schritte:
a) Bereitstellen einer vermahlenen und ggf. gesiebten Pulverlackzusammensetzung ohne der Zusammensetzung (C)
b) Vermischen der Pulverlackzusammensetzung mit (i) der mikronisierten Zusammensetzung (C) oder (ii) den einzelnen mikronisierten Komponenten, die die Zusammensetzung (C) umfasst

## Claims

1. A composition (C) for structuring of powder coatings, comprising
(a) at least one modified wax (MW) that has been modified by grafting with α,β-unsaturated carboxylic acids and/or derivatives thereof; and
(b) a modified phyllosilicate (MP), preferably an organophilically modified phyllosilicate (OMP).

2. The composition (C) as claimed in claim 1, **characterized in that** the modified phyllosilicate (MP) is a modified three-layer mineral, preferably a modified smectite or a modified hectorite, more preferably a modified bentonite (MB), most preferably an organophilically modified bentonite (OMB).

3. The composition (C) as claimed in claim 1 or 2, **characterized in that** the modified phyllosilicate (MP) is organophilically modified, preferably modified with alkylammonium compounds, more preferably with quaternary alkylammonium compounds.

4. The composition (C) as claimed in any of the preceding claims, **characterized in that** the modified wax (MW) and the modified phyllosilicate (MP) are in micronized form, or **in that** the modified phyllosilicate (MP) has been fully or partly coated with the modified wax (MW).

5. The composition (C) as claimed in any of the preceding claims, wherein the modified wax (MW) is selected from the group consisting of synthetic organic waxes, semisynthetic organic waxes, natural waxes, and mixtures thereof, preferably selected from polyolefin waxes, montan wax, rice bran wax, beeswax, sunflower wax, corn wax, carnauba wax, Fischer-Tropsch waxes, paraffin waxes, ester waxes and amide waxes, more preferably selected from polyethylene wax, polypropylene wax, poly(ethylene-co-propylene) wax, rice bran wax, corn wax and sunflower wax, more preferably from polyethylene wax, polypropylene wax, poly(ethylene-co-propylene) wax.

6. The composition (C) as claimed in any of the preceding claims, **characterized in that** the weight ratio of the modified wax (MW) to the modified phyllosilicate (MP), preferably to the modified bentonite (MB), more preferably to the organophilically modified bentonite (OMB), is between 4:1 and 1:3, preferably between 3.5:1 and 1:2, more preferably between 3:1 and 1:1.5, most preferably between 3:1 and 1:1.

7. The composition (C) as claimed in one or more of the preceding claims, **characterized in that** it comprises an inorganic additive, preferably one or more basic metal compounds from the group of the (semi)metal oxides, sulfates or hydroxides, more preferably selected from sulfates of the alkaline earth metals or oxides of the metals of transition group 4, especially preferably selected from barium sulfate, fumed silica and titanium dioxide.

8. The composition (C) as claimed in one or more of the preceding claims, **characterized in that** composition (C) contains less than 1% by weight of PTFE, preferably 0.5% by weight, more preferably 0.1% by weight, and most preferably zero PTFE.

9. A process for producing a composition (C) as claimed in any of the preceding claims 1-8, comprising the steps of
a) providing an optionally micronized, modified phyllosilicate (MP), the modified, optionally micronized wax (MW) and optionally further components,
b) mixing and optionally micronizing the components provided in step a), preferably by blending, hot mixing, extruding or grinding.

10. A process for producing a composition (C) as claimed in claim 9, comprising the steps of
a) providing and mixing the micronized modified phyllosilicate (MP) and the modified wax (MW);
b) heating the modified wax (MW) to a temperature within the melting range of the wax, with simultaneous stirring;
c) mixing the components by stirring.

11. The use of the composition (C) as claimed in any of the preceding claims for structuring of powder coatings.

12. A powder coating composition (PC) comprising
a) at least one thermoplastic or, after baking, thermoset polymer
b) composition (C).

13. The powder coating composition (PC) as claimed in claim 12, **characterized in that** the thermoset polymer after baking is selected from the group consisting of epoxy resin, epoxy resin/polyester hybrid systems, reactive polyesters or reactive acrylates, preferably from the group consisting of epoxy resin/polyester hybrid systems and hydroxyalkylamides.

14. The powder coating composition (PC) as claimed in one or more of claims 12-13, **characterized in that** it comprises an inorganic additive, preferably one or more basic metal compounds from the group of the (semi)metal oxides, sulfates and hydroxides, more preferably selected from sulfates of the alkaline earth metals and oxides of the metals of transition group 4, especially preferably selected from barium sulfate, fumed silica and titanium dioxide.

15. The powder coating composition (PC) as claimed in one or more of claims 12-14, **characterized in that** the amount of composition (C) in the powder coating composition (PC) is between 0.5% by weight and 10% by weight, preferably between 2% and 8% by weight, based on the mass of the overall powder coating composition (PC).

16. The powder coating composition (PC) as claimed in one or more of claims 12-15, **characterized in that** the weight ratio of the modified wax (MW) to the modified phyllosilicate (MP), preferably to the modified bentonite (MB), more preferably to the organophilically modified bentonite (OMB), is between 4:1 and 1:3, preferably between 3.5:1 and 1:2, more preferably between 3:1 and 1:1.5, most preferably between 3:1 and 1:1.

17. The powder coating composition (PC) as claimed in one or more of claims 12-16, **characterized in that** the powder coating composition (PC) contains less than 1% by weight of PTFE, preferably 0.5% by weight, more preferably 0.1%, and most preferably zero PTFE.

18. A process for producing a powder coating composition (PC) as claimed in any of claims 12-17, comprising the steps of
a) providing all necessary components of a powder coating composition and (i) composition (C) or (ii) the individual components that composition (C) comprises;
b) mixing the components provided in step a) by extruding;
c) grinding the powder coating composition extruded in step b);
d) optionally sieving the ground powder coating composition from c).

19. A process for producing a powder coating composition (C) as claimed in any of claims 12-17, comprising the steps of:
a) providing a ground and optionally sieved powder coating composition without composition (C)
b) mixing the powder coating composition with (i) the micronized composition (C) or (ii) the individual micronized components that composition (C) comprises.

## Revendications

1. Composition (C) destinée à la structuration de peintures en poudre, comprenant
(a) au moins une cire (mW) modifiée par greffage d'acides carboxyliques α,β-insaturés et/ou de leurs dérivés ; et
(b) un phyllosilicate modifié (mP), de préférence un phyllosilicate modifié de manière organophile (omP).

2. Composition (C) selon la revendication 1, **caractérisée en ce que** le phyllosilicate modifié (mP) est un minéral à trois couches modifié, de préférence une smectite modifiée ou une hectorite modifiée, de manière particulièrement préférée une bentonite modifiée (mB), et de manière tout particulièrement préférée une bentonite modifiée de manière organophile (omB).

3. Composition (C) selon la revendication 1 ou 2, **caractérisée en ce que** le phyllosilicate modifié (mP) est modifié de manière organophile, de préférence avec des composés d'alkylammonium, de manière particulièrement préférée avec des composés d'alkylammonium quaternaires.

4. Composition (C) selon l'une des revendications précédentes, **caractérisée en ce que** la cire modifiée (mW) et le phyllosilicate modifié (mP) se présentent sous forme micronisée ou **en ce que** le phyllosilicate modifié (mP) est entièrement ou partiellement enrobé de la cire modifiée (mW).

5. Composition (C) selon l'une des revendications précédentes, dans laquelle la cire modifiée (mW) est choisie parmi le groupe constitué de cires organiques synthétiques, de cires organiques semi-synthétiques, de cires naturelles et de mélanges de celles-ci, de préférence choisies parmi les cires polyoléfiniques, la cire de lignite, la cire de son de riz, la cire d'abeille, la cire de tournesol, la cire de maïs, la cire de carnauba, les cires de Fischer-Tropsch, les cires de paraffine, les cires d'esters et les cires d'amides, de préférence parmi la cire de polyéthylène, la cire de polypropylène, le cire de poly(éthylène-co-propylène), le cire de son de riz, le cire de maïs et le cire de tournesol, de préférence parmi la cire de polyéthylène, la cire de polypropylène et la cire de poly(éthylène-co-propylène).

6. Composition (C) selon l'une des revendications précédentes, **caractérisée en ce que** le rapport pondéral entre la cire modifiée (mW) et le phyllosilicate modifié (mP), de préférence la bentonite modifiée (mB), de manière particulièrement préférée la bentonite modifiée de manière organophile (omB) est compris entre 4:1 et 1:3, de préférence entre 3,5:1 et 1:2, de manière particulièrement préférée entre 3:1 et 1:1,5, et de manière tout à fait particulièrement préférée entre 3:1 et 1:1.

7. Composition (C) selon une ou plusieurs des revendications précédentes, **caractérisée en ce qu'**elle comprend un additif inorganique, de préférence un ou plusieurs composés de métaux basiques choisis parmi le groupe des oxydes, sulfates ou hydroxydes (semi-)métalliques, de préférence parmi les sulfates des métaux alcalino-terreux ou les oxydes des métaux de la 4e famille, et de manière particulièrement préférée parmi le sulfate de baryum, l'acide silicique pyrogéné et le dioxyde de titane.

8. Composition (C) selon l'une ou plusieurs des revendications précédentes, **caractérisée en ce que** la composition (C) contient moins de 1 % en poids de PTFE, de préférence 0,5 % en poids, de manière particulièrement préférée 0,1 % en poids, et de manière tout à fait particulièrement préférée aucun PTFE.

9. Procédé de préparation d'une composition (C) selon l'une des revendications 1 à 8 précédentes, comprenant les étapes suivantes :
a) la mise à disposition d'un phyllosilicate modifié (mP), éventuellement micronisé, de la cire modifiée (mW), éventuellement micronisée, et, en option, d'autres composants
b) mélanger et, le cas échéant, microniser les composants préparés à l'étape a), de préférence par malaxage, mélange à chaud, extrusion ou broyage.

10. Procédé de fabrication d'une composition (C) selon la revendication 9, comprenant les étapes suivantes :
a) la mise à disposition et le mélange du phyllosilicate modifié micronisé (mP) et de la cire modifiée (mW) ;
b) chauffer la cire modifiée (mW) à une température se situant dans la plage de fusion de la cire, tout en agitant ;
c) mélanger les composants par agitation.

11. Utilisation de la composition (C) selon l'une des revendications précédentes pour la structuration de peintures en poudre.

12. Composition de peinture en poudre (PC) comprenant
a) au moins un polymère thermoplastique ou un polymère thermodurcissable après cuisson
b) la composition (C).

13. Composition de peinture en poudre (PC) selon la revendication 12, **caractérisée en ce que** le polymère thermodurcissable après cuisson est choisi parmi le groupe constitué de la résine époxy, des systèmes hybrides résine époxy/polyester, des polyesters réactifs ou des acrylates réactifs, de préférence parmi le groupe constitué des systèmes hybrides résine époxy/polyester et des hydroxyalkylamides.

14. Composition de peinture en poudre (PC) selon une ou plusieurs des revendications 12 à 13, **caractérisée en ce qu'**elle comprend un additif inorganique, de préférence un ou plusieurs composés de métaux basiques choisis parmi le groupe des oxydes, sulfates et hydroxydes (semi-)métalliques, de préférence parmi les sulfates des métaux alcalino-terreux et les oxydes des métaux du 4e groupe latéral, et de manière particulièrement préférée parmi le sulfate de baryum, de la silice pyrogénée et du dioxyde de titane.

15. Composition de peinture en poudre (PC) selon une ou plusieurs des revendications 12 à 14, **caractérisée en ce que** la quantité de la composition (C) dans la composition de peinture en poudre (PC) est comprise entre 0,5 % et 10 % en poids, de préférence entre 2 et 8 % en poids, par rapport à la masse totale de la composition de peinture en poudre (PC).

16. Composition de peinture en poudre (PC) selon une ou plusieurs des revendications 12 à 15, **caractérisée en ce que** le rapport pondéral entre la cire modifiée (mW) et le phyllosilicate modifié (mP), de préférence la bentonite modifiée (mB), de manière particulièrement préférée la bentonite modifiée de manière organophile (omB), est compris entre 4:1 et 1:3, de préférence entre 3,5:1 et 1:2, de préférence entre 3,5:1 et 1:2, de préférence entre 3,5:1 et 1:1,5, et de manière tout à fait préférée entre 3:1 et 1:1.

17. Composition de peinture en poudre (PC) selon l'une ou plusieurs des revendications 12 à 16, **caractérisée en ce que** la composition de peinture en poudre (PC) contient moins de 1 % en poids de PTFE, de préférence 0,5 % en poids, de manière particulièrement préférée 0,1 %, et de manière tout à fait particulièrement préférée aucun PTFE.

18. Procédé de fabrication d'une composition de peinture en poudre (PC) selon l'une des revendications 12 à 17, comprenant les étapes suivantes :
a) la mise à disposition de tous les composants nécessaires à une composition de peinture en poudre, à savoir (i) la composition (C) ou (ii) les différents composants qui composent la composition (C) ;
b) mélanger les composants préparés à l'étape a) par extrusion ;
c) broyage de la composition de peinture en poudre extrudée à l'étape b)
d) Tamisage facultatif de la composition de peinture en poudre broyée issue de l'étape c).

19. Procédé de fabrication d'une composition de peinture en poudre (PC) selon l'une des revendications 12 à 17, comprenant les étapes suivantes :
a) préparation d'une composition de peinture en poudre broyée et, le cas échéant, tamisée, à l'exclusion de la composition (C)
b) Mélange de la composition de peinture en poudre avec (i) la composition micronisée (C) ou (ii) les différents composants micronisés qui composent la composition (C).
